# EUROPEAN PATENT SPECIFICATION

(11) **EP 1 754 627 B1**
(45) Date of publication and mention of the grant of the patent: **24.09.2008**
(21) Application number: 06076582.3
(22) Date of filing: 16.08.2006
(51) Int. Cl.: B60P 1/44

(54) **Motor vehicle provided with movable platform**
Ladebordwand für Kraftfahrzeuge
Véhicule automobile avec plate-forme élévatrice

(30) Priority: 19.08.2005 NL 1029772
(43) Date of publication of application: 21.02.2007
(73) Proprietor: de Laat, Petrus Antonius Adrianus, 5095 CD Hooge Mierde (NL)
(72) Inventor: de Laat, Petrus Antonius Adrianus, 5095 CD Hooge Mierde (NL)
(74) Representative: Brookhuis, Hendrik Jan Arnold

(56) References cited:
- DE-U1- 29 914 320
- FR-A- 2 285 263
- FR-A- 2 350 985
- FR-A- 2 684 340
- NL-C2- 1 025 994

## Description

The invention relates to a motor vehicle having a vehicle compartment which is limited by a floor, walls and a roof, wherein in the walls at least one access opening to the vehicle compartment is provided and wherein closing means are provided for the closure of the access opening. The closing means are in practice often formed by one or more doors, for example rear doors which open to the side, a rear door which opens upwards, a rolling door, a sliding door (often on the side of the motor vehicle, etc.), all dependent on the construction of the motor vehicle.

The motor vehicle is further provided with a movable platform associated with the closable access opening to the vehicle compartment, which platform can assume a lowermost position close to or on the ground, as well as a raised position in which the platform is located substantially at the level of the floor of the vehicle compartment.

The platform serves, for example, for the loading and unloading of one or more objects, such as, for example, a wheelchair, goods (for example for a delivery service), etc.

The platform has associated lifting means, which at least are arranged for the movement of the platform between the lowermost and the raised position thereof.

For example, a wheelchair or (sack) truck can be wheeled from the ground onto the platform in its lowermost position and can then be elevated with the platform in substantially horizontal attitude until the platform is level with the (loading) floor of the vehicle and preferably butts closely against it.

From the prior art, motor vehicles of the type stated in the introduction are generally known, both, for example, for the transport of handicapped persons in a wheelchair and for delivery services, etc. The motor vehicle can be an adapted passenger vehicle, a (delivery) van, truck, etc. For the construction of the movable platform and associated lifting means, numerous constructions have been proposed.

In the non-prepublished NL 1025994, the applicant describes a motor vehicle with movable platform, wherein the platform can assume a non-active stowage position such that the platform extends along the bottom of the roof in the vehicle compartment. Another such vehicle is shown in FR-A-2 684 340 upon which the preamble of claim 1 is based.

This stowage position is very advantageous, especially as the access opening of the vehicle compartment is at least again in large part usable, the platform occupies no floor space, and preferably - if the vehicle roof is high enough - the vehicle compartment can be walked through beneath the stowed-away platform.

It is pointed out that it is conceivable, at the stowage position of the platform, for a local elevation to be fitted in the vehicle roof, so that the platform, when it is raised, comes from below into the elevated part and thereby takes up even less space in the vehicle.

One object of the present invention is to propose an improvement and/or modifications to the known platform system.

Another object of the present invention is to propose attractive options as regards technical construction, realization and reliability, especially as regards the construction of parts which make possible the intended motions of the platform.

The invention provides a telescopic construction of the lifting arms, wherein a vehicle body part of each lifting arm is connected to the vehicle body about a (stationary) pivot point and a platform part of each lifting arm is displaceable relative to the vehicle body part.

In a preferred embodiment, the invention provides that the drive means comprise a chain or cable drive, having a chain or cable or the like which is guided along one or more chain wheels or rollers and which is connected to the lifting arm, and having a drive motor, preferably an electric drive motor.

Especially preferably, a chain or cable acts, preferably with an end thereof, on the platform part of a telescopic lifting arm, such that, by means of the chain, the platform part is displaceable relative to the vehicle body part.

Further advantageous embodiments are described in the sub- claims and the following description with reference to the drawing.

The requested exclusive right also relates to a movable platform with associated lifting means which is adapted for a motor vehicle according to the invention.

In the drawing:
Fig. 1 shows in diagrammatic representation a rearmost part of an example of a motor vehicle according to the invention, the platform being located in its lowermost position,
Fig. 2 shows the vehicle of Figure 1 with the platform in its raised position,
Fig. 3 shows the vehicle of Figure 1 with the platform in uptilted intermediate position,
Fig. 4 shows the vehicle of Figure 1 with the platform during tilting into the stowage position, and
Fig. 5 shows the vehicle of Figure 1 with the platform in its stowage position extending along the bottom of the roof.

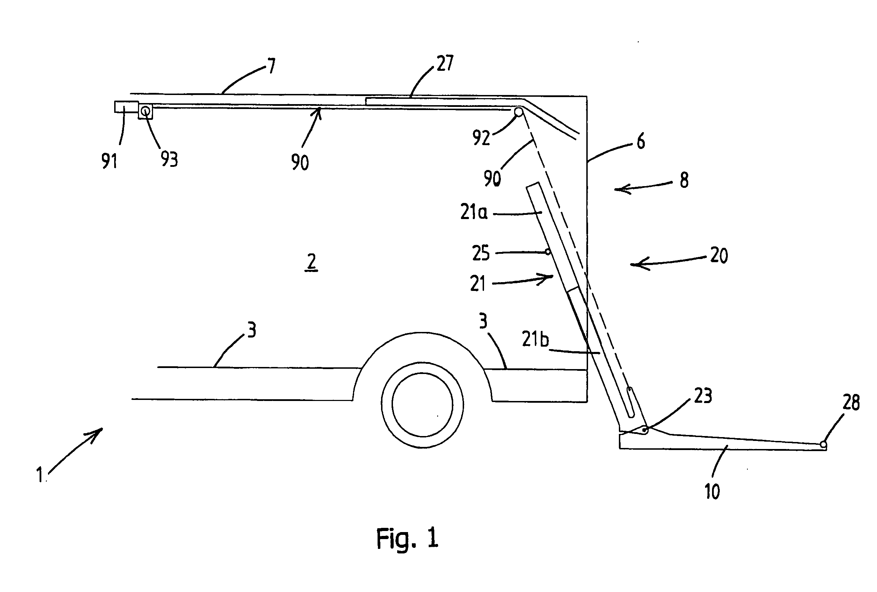

In Figures 1-5, the rearmost part of a motor vehicle 1, represented by way of non-limiting example, is illustrated.

The motor vehicle 1 has a vehicle compartment 2, which is limited by a floor 3, side walls, a rear wall 6 and a roof 7.

In the rear wall 6 an access opening 8 to the vehicle compartment 2 is present, closing means, constructed, for example, as outward-opening rear doors (not shown), being provided for the closure of the access opening 7.

The motor vehicle 1 is further provided with a movable platform 10, which is associated with the access opening 8 to the vehicle compartment 2 and which is here constructed as a one-piece, substantially flat plate. For example, the platform can comprise, for example, one or more (folding) parts.

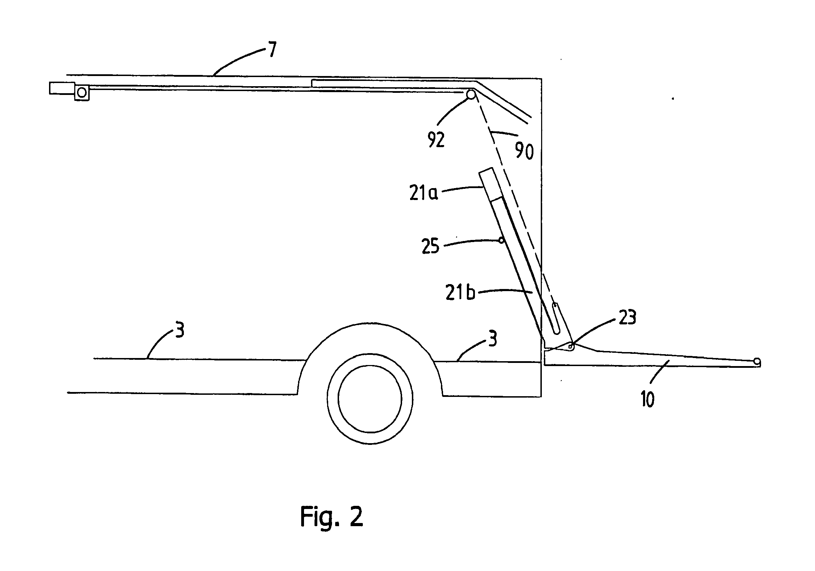

In Figure 1, the platform 10 is represented in its lowermost position close to or on the ground. In Figure 2, the platform is represented in its raised position, in which the platform 10 is located substantially at the level of the floor 3 of the vehicle compartment 2 and, with its border, butts closely against the border of the floor 3. The floor 3 may be provided with a tiltable floor panel along the border of the floor against which the platform in the raised position is located, so that any gap (for example owing to a rear bumper of the vehicle) can be bridged. This panel (not shown) can preferably be tilted over by hand.

The platform 10 serves, for example, for the loading and unloading of one or more objects to and from the compartment 2, such as, for example, a wheelchair, a trolley (sack truck, pallet truck, etc.).

In the illustrated example there are provided lifting means 20 fitted to both sides of the platform 10, which lifting means are fastened, on the one hand, to the platform 10 and, on the other hand, to the body of the vehicle 1.

In the drawings, the lifting means 20 on one side of the vehicle are represented diagrammatically. On the other side, a substantially identical construction can be fitted.

The lifting means serve at least for the movement of the platform 10 - and the load placed thereon - between the lowermost and the raised position.

In this example, the lifting means 20 comprise a lifting arm 21 on each side of the platform 10.

Each lifting arm 21 is telescopically constructed with a vehicle body part 21a, which is connected to the vehicle body, and with a platform part 21b, which is connected to the platform 10 and which is displaceable relative to the vehicle body part 21a.

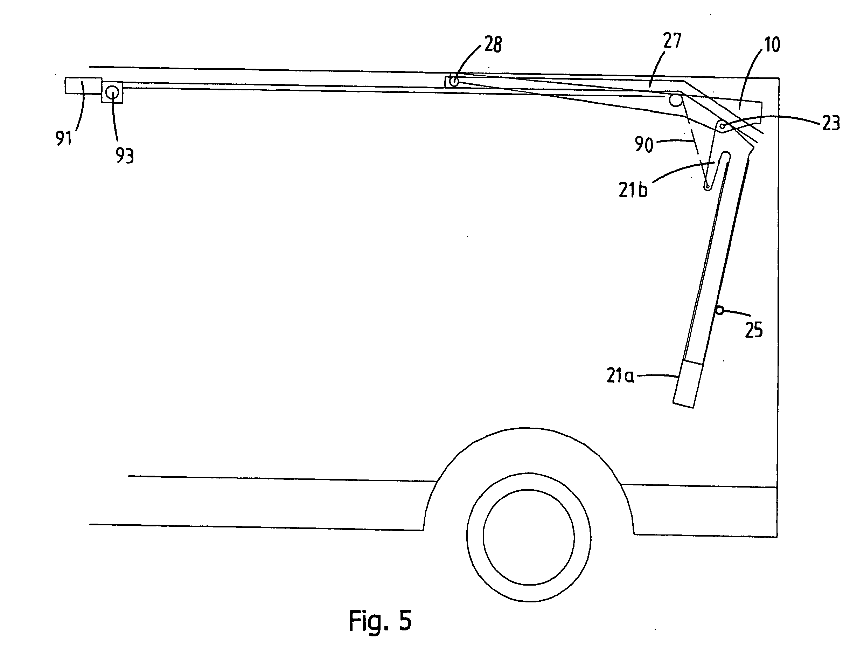

The vehicle body part 21a is rotatably connected to the vehicle body, here about a stationary pivot point 25. As can be seen from the drawing, the lifting arm 21 can thereby rotate between a position pointing obliquely downwards and "outwards", in this case rearwards, in which the lifting arm 21 with the coupling to the platform 10 is directed downwards, and a position in which the lifting arm 21 with the coupling to the platform 10 is directed towards the roof (see Figure 5).

The stationary pivot point can be provided by a supporting structure, for example having a tubular frame, which can preferably be retrofitted in an existing motor vehicle, for example in a delivery van.

The platform part 21b of the lifting arm 21 is coupled to the platform 10 by a coupling 23. The coupling 23 is a hinge coupling, a stop for the platform against the platform part 21b of the lifting arm also being provided.

The platform 10 rests against this stop when the platform 10 is orientated substantially horizontally (see Figures 1 and 2) for the purpose of up and down motion between the lowermost and the raised position.

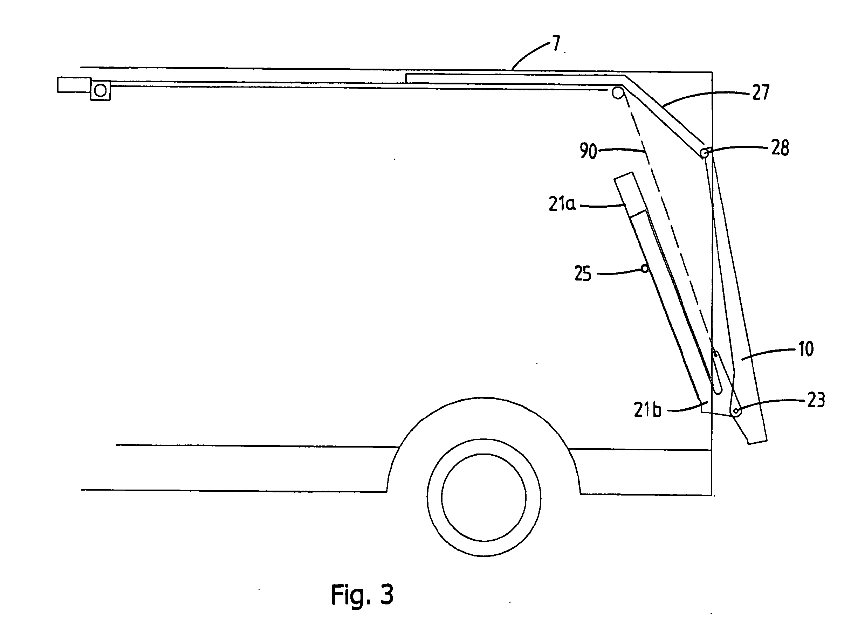

The hinge coupling 23 further allows - at least in the raised position of the platform - the platform 10 to be tilted up, preferably by hand, into a substantially vertical attitude (see Figure 3). A drive mechanism and/or a gas spring (preference being for a gas spring) or the like may be provided in order to facilitate the tilting up of the platform.

The drive means for each lifting arm 21 here comprise a chain drive having a chain 90, which is guided along one or more chain wheels, rollers or other guides and which is connected to the lifting arm 21, and having a chain drive motor 91, preferably an electric chain drive motor.

It can be recognized that the chain 90 is here fastened by one end to the platform part 21b of the telescopic lifting arm 21, such that, by means of the chain, the platform part 21a is displaceable relative to the vehicle body part 21a, and hence the platform between the lowermost and the raised position.

The chain 90 is here guided close to the roof 7 of the vehicle over a rearmost guide 92, here over a chain wheel or roller, preferably such that the chain 90, when the platform 10 is moved between the lowermost position and the raised position, extends substantially parallel to the direction of the lifting arm 21.

From the rearmost guide 92, the chain 90 runs more or less along the roof 7 forwards to the drive motor 91, which, via a driven chain wheel 93, acts on the chain. The chain 90 then runs, for example, further through into a "storage space", for example a vertical tube in the vehicle. A weight may hang from the other end of the chain in order to keep the chain taut in the tube, or a rubber band or the like may be provided.

Preferably, a single drive motor 91 is provided for the chains of the two lifting arms, a synchronizing shaft being provided, which, at both sides of the vehicle, is provided with a driven chain wheel 93, which is meshed with the chain of the lifting means that are present there.

In Figures 1-4 it can be recognized that the chain 90 - if the platform 10 is in the raised position - is located at a distance spaced from, in this case behind, the pivot point 25 of the lifting arm 21, such that - after the substantially vertical tilting of the platform (see Figure 3) - as a result of the drawing-up of the chain 90, the lifting arm 21 proceeds to rotate about that pivot point 25.

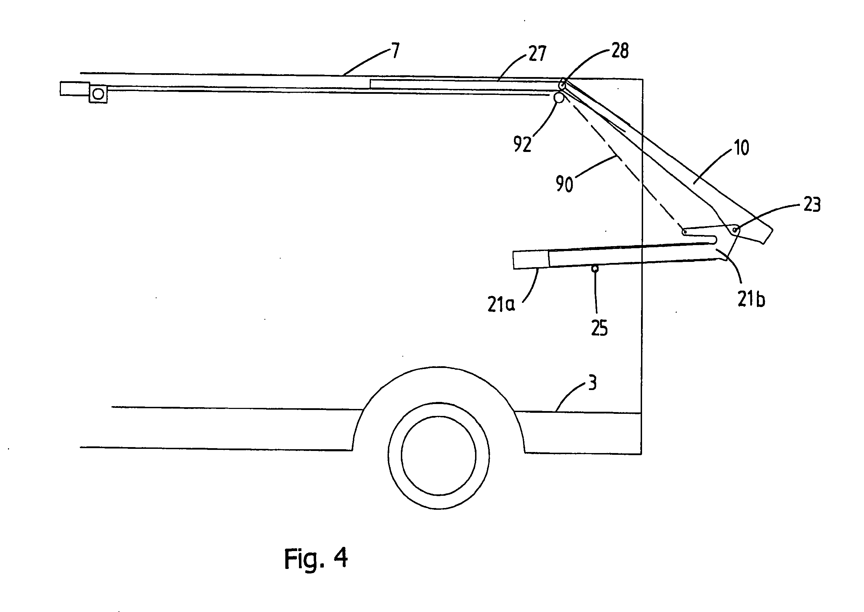

In the drawing, it can further be seen that along the roof 7, at each side of the platform and in this case, therefore, on each side of the vehicle compartment, a guide (here a rail 27) is provided, with which a follower 28 (for example a roller), in this case fitted to the platform 10 close to the free end, proceeds to interact when the vertically tilted platform is moved further up by the lifting means (see Figures 3 and 4), so that the following rotary motion of the lifting arms 21 causes the follower 28 to slide along the guide 27 and the platform to tilt further and slide inwards in the vehicle compartment.

In Figures 4 and 5, it can be recognized that, as a result of the chain 90 being drawn further and further up, the lifting arm 21 tilts further up about the pivot point 25.

It will be clear that, in place of a chain 90, a cable or the like may also be used.

In one variant (not shown), it can be provided that the telescopic motion of the lifting arms 21 is realized with a hydraulic drive, for example a hydraulic cylinder at each of the lifting arms.

In this variant, it might be provided to make the chain or cable 90 act on the vehicle part 21a of the lifting arms, at a distance from the pivot point 25, so that with this chain or cable only the rotary motion of the lifting arms 21 is realized.

In yet another variant, the rotation of the lifting arms about their pivot point 21 is realized differently, for example with a hydraulic actuator at each lifting arm.

In Figure 5 it can be seen that the platform 10 extends in the stowage position along the bottom of the roof 7 in the vehicle compartment 2. The surface of the platform 10 thus lies more or less parallel to the roof 7. In this variant, the bottom side of the platform 10 here points towards the roof 7. Preferably, the distance between the roof and the platform is less than 20 cm, especially preferably less than 10 cm. This stowage position beneath the roof 7 is very advantageous, since the access via the doors or the like can be used again, little useful space is taken up, and the driver may again have a rear view through windows present in the rear door(s).

It will be clear that the invention can also be realized for use with an access opening on a side face of the vehicle, for example an opening at this location which can be closed off by a sliding door.

## Claims

1. Motor vehicle (1) comprising a vehicle compartment (2) limited by a floor (3), walls and a roof (7), wherein in the walls at least one access opening (6) to the vehicle compartment (2) is provided, closing means being provided for the closure of the access opening, which motor vehicle is further provided with a movable platform (10) associated with the access opening to the vehicle compartment, which platform can assume a lowermost position close to or on the ground, as well as a raised position in which the platform is located substantially at the level of the floor (3) of the vehicle compartment, which platform (10) serves, for example, for the loading and unloading of one or more objects, such as, for example, a wheelchair,
wherein on both sides there are provided lifting means (20) which act on the platform and which are fastened, on the one hand, to the platform and, on the other hand, to the body of the vehicle, which lifting means (20, 21, 90, 91) are at least arranged for the movement of the platform between the lowermost and the raised position thereof,
which platform (10) can further assume at least a non-active stowage position in the vehicle compartment closed off by the closing means, the platform being able to assume a non-active stowage position such that the platform (10) extends along the bottom of the roof (7) in the vehicle compartment (2),
wherein the lifting means comprise on each side of the platform a lifting arm (21), and wherein each lifting arm (21) is telescopically constructed with a vehicle body part (21 a) and with a platform part (21 b), which is connected to the platform (10) by a coupling (23) and which is telescopically displaceable relative to the vehicle body part (21 a),
wherein drive means (90-93) associated with each lifting arm are provided,
**characterised in that**
the vehicle body part (21 a) of each lifting arm is rotatably connected to the vehicle body, preferably about a stationary pivot point (25), between a position in which the lifting arm (21) with the coupling to the platform is directed downwards and a position in which the lifting arm (21) with the coupling to the platform is directed towards the roof,
and **in that** the drive means comprise:
- a chain or cable drive, having a chain or cable (90) which acts on, preferably is fastened by one end to, the platform part (21b) of the telescopic lifting arm (21), and which chain or cable (90) is guided along one or more chain wheels or rollers, which drive means further comprising a drive motor (91) such that, by means of the chain or cable (90) the platform part (21 b) is displaceable up and down relative to the vehicle body part (21 a) and such that - if the platform is in the raised position - drawing up the chain or cable (90) causes the lifting arm (21) to rotate with respect to the vehicle body to the position in which the lifting arm (21) with the coupling to the platform is directed towards the roof,
or **in that** the drive means comprise:
- a hydraulic cylinder at each of the lifting arms such that the platform part (21 b) is displaceable up and down relative to the vehicle body part (21 a) by said hydraulic cylinders and the drive means further including:
- a chain or cable (90) acting on the vehicle part (21 a) of the lifting arms, at a distance from the pivot point (25), so that with this chain or cable only the rotary motion of the lifting arms is performed, or
- a hydraulic actuator at each lifting arm that is arranged to realize the rotation of the lifting arms about their pivot point (25).

2. Motor vehicle according to claim 1, wherein the lifting means are constructed such that the lifting arms - when the drive means are operated - move the platform from the lowermost position in a substantially horizontal attitude into the raised position,
wherein the platform (10) is also moved in the direction of the floor (3) of the vehicle, wherein the platform part (21b) of each lifting arm (21) then slides up relative to the associated vehicle body part (21a), wherein, during this motion, the vehicle body part preferably remains in a stationary position.

3. Motor vehicle according to one or more of the preceding claims,
wherein the coupling (23) between the platform and each lifting arm is a hinge coupling having a stop, against which stop the platform (10) rests when the platform is orientated substantially horizontally for the purpose of up and down motion between the lowermost and the raised position, and which hinge coupling (23) further allows - at least in the raised position of the platform - the platform to be tilted up, preferably by hand, into a substantially vertical attitude.

4. Motor vehicle according to one or more of the preceding claims, wherein the chain or cable is guided close to the roof (7) of the vehicle over a rearmost guide (92), for example over a chain wheel or roller, preferably such that the chain or cable (90), when the platform is moved between the lowermost position and the raised position, extends substantially parallel to the direction of the lifting arm (21).

5. Motor vehicle according to claim 4, wherein the chain or cable (90) - if the platform is in the raised position - is located at a distance from the pivot point (25) of the lifting arm, such that - after the substantially vertical tilting of the platform (10) - as a result of the drawing-up of the chain (90), the lifting arm (21) proceeds to rotate about that pivot point (25).

6. Motor vehicle according to one or more of the preceding claims, wherein for the platform a guide (preferably a rail 27) is provided alongside the roof, preferably one guide for each side of the platform, and wherein on the platform a follower interacting with the guide is provided, for example a follower (for example a roller 28) fitted to the platform close to the free end, which follower proceeds to interact with the guide when the substantially vertically tilted platform is moved further up by the lifting means, so that the further rotary motion of the lifting arms (21) causes the platform to tilt and to slide inwards in the vehicle compartment.

7. Motor vehicle according to claim 6, wherein the chain or cable runs from a driven chain wheel or roller (93) substantially along the roof to the rearmost guide (92) of the chain or cable.

8. Motor vehicle according to one or more of the preceding claims, wherein a single drive motor is provided for the chains or cables of the drive mechanism, and wherein a synchronizing shaft is provided, which, at both sides, is provided with a chain wheel or cable roller, which is meshed with the chain or cable of the lifting means that are present there.

9. Motor vehicle according to one or more of the preceding claims, wherein the access opening (6) is provided on the rear side of the motor vehicle, and wherein the lifting means are located along one or both side walls of the vehicle compartment (2).

10. Motor vehicle according to one or more of the preceding claims, wherein the platform (10), in the stowage position extending along the bottom of the roof, is turned with its bottom side towards the roof (7).

11. Movable platform (10) with associated lifting means (20) which is adapted for a motor vehicle according to one or more of the preceding claims.

## Patentansprüche

1. Motorfahrzeug (1) mit einem Fahrzeuginnenraum (2), der durch einen Boden (3), Wände und ein Dach (7) begrenzt ist, wobei in den Wänden wenigstens eine Zugangsöffnung (6) zum Fahrzeuginnenraum (2) vorgesehen ist und Schließmittel zum Schließen der Zugangsöffnung vorgesehen sind, und mit einer bewegbaren Plattform (10), die der Zugangsöffnung zum Fahrzeuginnenraum zugeordnet ist, wobei die Plattform eine unterste Position in der Nähe des Untergrunds oder auf dem Untergrund und eine angehobene Position einnehmen kann, in der die Plattform im wesentlichen auf der Höhe des Bodens (3) des Fahrzeuginnenraums angeordnet ist, wobei die Plattform (10) beispielsweise zum Be- und Entladen von einem oder mehreren Objekten dient, wie beispielsweise ein Rollstuhl,
wobei an beiden Seiten Hebemittel (20) vorgesehen sind, die auf die Plattform wirken und einerseits an der Plattform und andererseits an dem Körper des Fahrzeugs befestigt sind, wobei die Hebemittel (20, 21, 90, 91) wenigstens zur Realisierung der Bewegung der Plattform zwischen der untersten und der angehobenen Position vorgesehen sind,
wobei die Plattform (10) ferner wenigstens eine nicht-aktive Verstauungsposition in dem durch das Schließmittel verschlossenen Fahrzeuginnenraum einnehmen kann, wobei die Plattform eine nicht-aktive Verstauungsposition derart einnehmen kann, dass sich die Plattform (10) entlang des Bodens des Daches (7) in dem Fahrzeuginnenraum (2) erstreckt,
wobei die Hebemittel auf jeder Seite der Plattform einen Hebearm (21) aufweisen, und wobei jeder Hebearm (21) teleskopisch mit einem Fahrzeugkörperteil (21a) und mit einem Plattformteil (21b) ausgebildet ist, das mit der Plattform (10) mit Hilfe eines Anschlussstückes (23) verbunden und teleskopisch relativ zu dem Fahrzeugkörperteil (21a) bewegbar ist, und
wobei Antriebsmittel (90 bis 93) vorgesehen sind, die jedem Hebearm zugeordnet sind,
**dadurch gekennzeichnet, dass**
das Fahrzeugkörperteil (21a) jedes Hebearms zwischen einer Position, in welcher der Hebearm (21) mit dem Anschlussstück zum Plattform abwärts weist, und einer Position, in welcher der Hebearm (21) mit dem Anschlussstück zum Plattform in Richtung des Daches weist, drehbar bevorzugt um einen ortsfesten Schwenkpunkt (25) mit dem Fahrzeugkörper verbunden ist,
und die Antriebsmittel aufweisen:
- einen Ketten- oder Seilantrieb mit einer Kette oder einem Seil (90), die bzw. das auf das Plattformteil (21b) des teleskopischen Hebearms (21) wirkt und bevorzugt an einem Ende des Plattformteils (21b) befestigt ist, wobei die Kette oder das Seil (90) entlang eines oder mehrerer Kettenräder oder Rollen geführt ist, und wobei die Antriebsmittel ferner einen Antriebsmotor (91) aufweisen, so dass das Plattformteil (21b) durch die Kette oder das Seil (90) auf- und abwärts relativ zu dem Fahrzeugkörperteil (21a) bewegt werden kann, und dass - wenn die Plattform in der angehobenen Position angeordnet ist - ein Ziehen der Kette oder des Seils (90) in Aufwärtsrichtung dazu führt, dass sich der Hebearm (21) in Bezug auf den Fahrzeugkörper in die Position dreht, in welcher der Hebearm (21) mit dem Ansclussstück zum Plattform aufwärts in Richtung des Daches gerichtet ist,
oder dass die Antriebsmittel aufweisen:
- einen Hydraulikzylinder an jedem der Hebearme, so dass das Plattformteil (21b) auf- und abwärts relativ zu dem Fahrzeugkörperteil (21a) mit Hilfe der Hydraulikzylinder bewegt werden kann, wobei die Antriebsmittel ferner aufweisen:
- eine Kette oder ein Seil (90), die bzw. das auf das Fahrzeugteil (21a) der Hebearme wirkt und beabstandet von dem Schwenkpunkt (25) wirkt, so dass mit dieser Kette oder mit diesem Seil nur die Drehbewegung der Hebearme durchgeführt wird, oder
- ein hydraulisches Betätigungselement an jedem Hebearm, das angeordnet ist, um die Bewegung der Hebearme um ihren Schwenkpunkt (25) zu realisieren.

2. Motorfahrzeug nach Anspruch 1, wobei die Hebemittel derart ausgebildet sind, dass die Hebearme - wenn die Antriebsmittel betrieben werden - die Plattform aus der untersten Position in einer im wesentlichen horizontalen Weise in die angehobene Position bewegen, wobei die Plattform (10) auch in die Richtung des Bodens (3) des Fahrzeuges bewegt wird, wobei das Plattformteil (21b) jedes Hebearms (21) dann relativ zu den zugeordneten Fahrzeugkörperteilen (21a) aufwärts gleitet, wobei das Fahrzeugkörperteil während dieser Bewegung bevorzugt in einer ortsfesten Stellung verweilt.

3. Motorfahrzeug gemäß einem oder mehreren der vorhergehenden Ansprüche, wobei das Verbindungsstück (23) zwischen der Plattform und jedem Hebearm ein Gelenkverbindungsstück mit einem Anschlag ist, gegen den sich die Plattform (10) stützt, wenn die Plattform im wesentlichen horizontal zum Zwecke der Auf- und Abwärtsbewegung zwischen der untersten und der angehobenen Position ausgerichtet ist, wobei es dass Gelenkverbindungsstück (23) - zumindest in der angehobenen Position - ferner gestattet, dass die Plattform bevorzugt manuell in einer im wesentlichen vertikalen Weise aufwärts geschwenkt werden kann.

4. Motorfahrzeug nach einem oder mehreren der vorhergehenden Ansprüche, wobei die Kette oder das Seil in der Nähe des Daches (7) des Fahrzeuges über eine hintere Führung (92), beispielsweise über ein Kettenrad oder eine Rolle bevorzugt derart geführt ist, dass sich die Kette oder das Seil (90), wenn die Plattform zwischen der untersten Position und der angehobenen Position bewegt wird, im wesentlichen parallel zu der Richtung des Hebearms (21) erstreckt.

5. Motorfahrzeug nach Anspruch 4, wobei die Kette oder das Seil (90) - wenn die Plattform in der angehobenen Position angeordnet ist - beabstandet von dem Schwenkpunkt (25) des Hebearms positioniert ist, so dass - nach dem im wesentlichen vertikalen Kippen der Plattform (10) - der Hebearm (21) aufgrund eines Ziehens der Kette (90) in Aufwärtsrichtung beginnt sich um den Schwenkpunkt (25) zu drehen.

6. Motorfahrzeug nach einem oder mehreren der vorhergehenden Ansprüche, wobei für die Plattform eine Führung (vorzugsweise eine Schiene (27)) entlang des Daches vorgesehen ist, vorzugsweise eine Führung für jede Seite der Plattform, und wobei an der Plattform ein Mittläufer vorgesehen ist, der mit der Führung zusammen wirkt, beispielsweise ein Mittläufer (zum Beispiel eine Rolle (28)), die an der Plattform in der Nähe des freien Endes eingesetzt ist, wobei der Mittläufer weiter mit der Führung zusammenwirkt, wenn die im wesentlichen vertikal gekippte Plattform durch die Hebemittel weiter aufwärts bewegt wird, so dass die weitere Drehbewegung der Hebearme (21) dazu führt, dass die Plattform gekippt wird und einwärts in den Fahrzeuginnenraum gleitet.

7. Motorfahrzeug nach Anspruch 6, wobei sich die Kette oder das Seil von einem angetriebenen Kettenrad oder einer angetriebenen Rolle (93) im wesentlichen entlang des Daches zu der untersten Führung (92) der Kette oder des Seils erstreckt.

8. Motorfahrzeug nach einem oder mehreren der vorhergehenden Ansprüche, wobei ein einzelner Antriebsmotor für die Ketten oder Seil des Antriebsmechanismus vorgesehen ist, und wobei eine Synchronisierungswelle vorgesehen ist, die an beiden Seiten mit einem Kettenrad oder einer Seilrolle versehen ist, die mit dem dort vorhandenen Abschnitt der Kette oder des Seils des Hebemittels in Eingriff ist.

9. Motorfahrzeug nach einem oder mehreren der vorhergehenden Ansprüche, wobei die Zugangsöffnung (6) an der Rückseite des Motorfahrzeuges vorgesehen ist, und wobei die Hebemittel entlang einer oder beider Seitenwände des Fahrzeuginnenraums (2) angeordnet sind.

10. Motorfahrzeug nach einem oder mehreren der vorhergehenden Ansprüche, wobei die Plattform (10) in ihrer Verstauungsposition, in der sie sich entlang des Bodens des Daches erstreckt, mit ihrer Bodenseite in Richtung des Daches (7) weist.

11. Bewegbare Plattform (10) mit zugeordneten Hebemitteln (20), die für ein Motorfahrzeug gemäß einem oder mehreren der vorhergehenden Ansprüche geeignet ist.

## Revendications

1. Véhicule automobile (1) comprenant un habitacle de véhicule (2) délimité par un plancher (3), des parois et un toit (7), dans lequel au moins une ouverture d'accès (6) à l'habitacle de véhicule (2) est prévue dans les parois, des moyens de fermeture étant prévus pour la fermeture de l'ouverture d'accès, ledit véhicule automobile étant en outre muni d'une plateforme mobile (10) associée à l'ouverture d'accès à l'habitacle de véhicule, ladite plateforme pouvant emprunter une position la plus basse proche du sol ou sur celui-ci, ainsi qu'une position haute dans laquelle la plateforme est positionnée sensiblement au niveau du plancher (3) de l'habitacle de véhicule, ladite plateforme (10) servant, par exemple, au chargement et au déchargement d'un ou de plusieurs objets, tel que par exemple un fauteuil roulant,
dans lequel des moyens de levage (20) sont prévus des deux côtés, qui agissent sur la plateforme et qui sont fixés d'une part à la plateforme et d'autre part à la carrosserie du véhicule, lesdits moyens de levage (20, 21, 90, 91) étant au moins agencés pour le déplacement de la plateforme entre la position la plus basse et la position haute de celle-ci,
ladite plateforme (10) pouvant en outre emprunter au moins une position non active de rangement dans l'habitacle de véhicule fermé par les moyens de fermeture, la plateforme étant apte à assumer une position non active de rangement telle que la plateforme (10) s'étende le long du dessous du toit (7) dans l'habitacle de véhicule (2),
dans lequel les moyens de levage comprennent de chaque côté de la plateforme un bras de levage (21), et
dans lequel chaque bras de levage (21) est construit de manière télescopique avec une partie de carrosserie de véhicule (21a) et une partie de plateforme (21b), qui est reliée à la plateforme (10) par un couplage (23) et qui est déplaçable de manière télescopique par rapport à la partie de carrosserie de véhicule (21a),
dans lequel des moyens d'entraînement (90 à 93) associés à chaque bras de levage sont prévus,
**caractérisé en ce que**
la partie de carrosserie de véhicule (21a) de chaque bras de levage est reliée de manière rotative à la carrosserie de véhicule, de préférence autour d'un point de pivotement fixe (25), entre une position dans laquelle le bras de levage (21) avec le couplage à la plateforme est dirigé vers le bas et une position dans laquelle le bras de levage (21) avec le couplage à la plateforme est dirigé vers le toit,
et **en ce que** les moyens d'entraînement comprennent :
un entraînement par chaîne ou par câble, comportant une chaîne ou un câble (90) qui agit sur, de préférence qui est fixé(e) par une extrémité à la partie de plateforme (21b) du bras de levage télescopique (21), ladite chaîne ou ledit câble (90) étant guidé(e) le long d'un ou plusieurs rouleaux ou roues de chaîne, lesdits moyens d'entraînement comprenant en outre un moteur d'entraînement (91), de telle sorte que, au moyen de la chaîne ou du câble (90), la partie de plateforme (21b) est déplaçable vers le haut et vers le bas par rapport à la partie de carrosserie de véhicule (21a) et de telle sorte que - si la plateforme est dans la position haute - le fait de remonter la chaîne ou le câble (90) entraîne la rotation du bras de levage (21) par rapport à la carrosserie de véhicule vers la position dans laquelle le bras de levage (21) avec le couplage à la plateforme est dirigé vers le toit,
ou **en ce que** les moyens d'entraînement comprennent :
un vérin hydraulique au niveau de chacun des bras de levage, de telle sorte que la partie de plateforme (21b) puisse être déplacée vers le haut et vers le bas par rapport à la partie de carrosserie de véhicule (21a) par lesdits vérins hydrauliques, et les moyens d'entraînement comprenant en outre :
une chaîne ou un câble (90) agissant sur la partie de véhicule (21a) des bras de levage, à une distance par rapport au point de pivotement (25), de telle sorte qu'avec cette chaîne ou ce câble, seul le mouvement rotatif des bras de levage est exécuté, ou
un actionneur hydraulique au niveau de chaque bras de levage qui est agencé de sorte à exécuter la rotation des bras de levage autour de leur point de pivotement (25).

2. Véhicule automobile selon la revendication 1, dans lequel les moyens de levage sont construits de telle sorte que les bras de levage - quand les moyens d'entraînement sont actionnés - déplacent la plateforme de la position la plus basse vers la position haute dans une orientation sensiblement horizontale, dans lequel la plateforme (10) est aussi déplacée dans le sens du plancher (3) du véhicule, dans lequel la partie de plateforme (21b) de chaque bras de levage (21) coulisse alors par rapport à la partie de carrosserie de véhicule (21a) associée, dans lequel, pendant ce mouvement, la partie de carrosserie de véhicule reste de préférence dans une position fixe.

3. Véhicule automobile selon une ou plusieurs des revendications précédentes, dans lequel le couplage (23) entre la plateforme et chaque bras de levage est un couplage articulé ayant une butée, la plateforme (10) reposant contre ladite butée quand la plateforme est orientée sensiblement horizontalement dans le but d'un mouvement ascendant et descendant entre la position la plus basse et la position haute, et ledit couplage articulé (23) permettant en outre - au moins dans la position haute de la plateforme - de faire basculer la plateforme, de préférence manuellement, dans une orientation sensiblement verticale.

4. Véhicule automobile selon une ou plusieurs des revendications précédentes, dans lequel la chaîne ou le câble est guidé(e) à proximité du toit (7) du véhicule sur un guide arrière (92), par exemple sur une roue ou un rouleau de chaîne, de préférence de telle sorte que la chaîne ou le câble (90), quand la plateforme est déplacée entre la position la plus base et la position haute, s'étende de manière sensiblement parallèle au sens du bras de levage (21).

5. Véhicule automobile selon la revendication 4,
dans lequel la chaîne ou le câble (90) - si la plateforme est dans la position haute - est positionné(e) à une distance du point de pivotement (25) du bras de levage, de telle sorte que - après le basculement sensiblement vertical de la plateforme (10) - en conséquence de la tension de la chaîne (90), le bras de levage (21) entre en rotation autour de ce point de pivotement (25).

6. Véhicule automobile selon une ou plusieurs des revendications précédentes, dans lequel, pour la plateforme, un guide (de préférence un rail 27) est prévu le long du toit, de préférence un guide pour chaque côté de la plateforme, et dans lequel, sur la plateforme, un suiveur est prévu en interaction avec le guide, par un exemple un suiveur (par exemple un rouleau 28) adapté sur la plateforme à proximité de l'extrémité libre, ledit suiveur entrant en interaction avec le guide quand la plateforme basculée dans un sens sensiblement vertical est déplacée davantage vers le haut par les moyens de levage, de sorte que le mouvement de rotation supplémentaire des bras de levage (21) entraîne le basculement de la plateforme et son coulissement vers l'intérieur, dans l'habitacle de véhicule.

7. Véhicule automobile selon la revendication 6, dans lequel la chaîne ou le câble s'étend à partir d'une roue ou d'un rouleau mené de chaîne (93) sensiblement le long du toit vers le guide arrière (92) de la chaîne ou du câble.

8. Véhicule automobile selon une ou plusieurs des revendications précédentes, dans lequel un seul moteur d'entraînement est prévu pour les chaînes ou les câbles du mécanisme d'entraînement et dans lequel un arbre de synchronisation est prévu, lequel est muni aux deux côtés d'une roue de chaîne ou d'un rouleau de câble qui est engrené(e) avec la chaîne ou le câble des moyens de levage situés à cet endroit.

9. Véhicule automobile selon une ou plusieurs des revendications précédentes, dans lequel l'ouverture d'accès (6) est prévue sur le côté arrière du véhicule automobile, et dans lequel les moyens de levage sont positionnés le long d'une ou des deux parois latérales de l'habitacle de véhicule (2).

10. Véhicule automobile selon une ou plusieurs des revendications précédentes, dans lequel, dans la position de rangement s'étendant le long du dessous du toit, le côté inférieur de la plateforme (10) est orienté vers le toit (7).

11. Plateforme mobile (10) avec moyens de levage associés (20) adaptée pour un véhicule automobile selon une ou plusieurs des revendications précédentes.
